# DEMANDE DE BREVET EUROPEEN

(11) **EP 1 382 989 A1**
(43) Date de publication de la demande: **21.01.2004**
(21) Numéro de dépôt: 03291683.5
(22) Date de dépôt: 07.07.2003
(51) Int. Cl.: G02C 1/04

(54) **Monture de lunettes du type à liens de cerclage souples**

(30) Priorité: 17.07.2002 FR 0209026
(71) Demandeur: Architectures, 75017 Paris (FR)
(72) Inventeur: Magee, Alyson, 75010 Paris (FR)
(74) Mandataire: Jaunez, Xavier

(57) **Abrégé**

La présente invention concerne une monture de lunettes, du type comportant une structure principale de monture (2) équipée de deux entourages (3, 8) propres chacun à recevoir un verre de lunettes (6), avec une bordure supérieure (3) faisant partie de la structure principale (2), et un lien de cerclage souple (8) passant dans une gorge périphérique (7) du verre (6).

Conformément à l'invention, chaque lien de cerclage souple (8) est fixé par chacune de ses extrémités à une pièce d'ancrage associée (10) à deux flasques juxtaposés réunis par un axe transversal constituant un moyen d'accrochage apte à coopérer avec un crochet homologue prévu sur la structure principale de monture (2). Les moyens d'accrochage précités sont agencés pour réaliser une fixation libérable entre la pièce intermédiaire d'ancrage (10) et la structure principale de monture (2).

## Description

### DOMAINE DE L'INVENTION

La présente invention concerne le domaine des lunettes, et plus précisément la fixation des verres sur une monture de lunettes au moyen d'un dispositif comportant, pour chaque verre, un élément ou lien souple de cerclage passant dans un drageoir ou gorge associé et s'accrochant sur la monture de part et d'autre du verre.

### ARRIERE-PLAN DE L'INVENTION

On connaît déjà depuis une cinquantaine d'années la technique de fixation des verres consistant à utiliser des éléments ou liens souples de cerclage, en général un brin de fil de nylon ou d'acier entourant une partie plus ou moins importante de chaque verre. Cette technique est en effet séduisante par l'effet de légèreté et de discrétion qu'elle procure pour la personne qui porte les lunettes ainsi équipées.

Les constructeurs ont eu à se pencher sur le problème délicat de l'organisation de l'accrochage de tels éléments ou liens souples sur la monture de lunettes, et diverses solutions ont été proposées.

Il est ainsi connu de percer la monture pour faire passer le fil souple et y bloquer l'extrémité du fil, soit par une surépaisseur terminale du fil (voir par exemple le document GB-A-2 102 150, FR-A-2 504 694, FR-A-2 489 970, US-A-2 516 549, FR-A-1 156 468), soit par un noeud (voir par exemple les documents US-A-2 516 549, FR-A-2 506 958, FR-A-2 701 573, EP-A-0 643 316, EP-A-1 031 871), soit encore par un décrochement du fil qui peut être simple (voir le document GB-A-775.293), ou double selon une technique dite du double trou (voir par exemple les documents FR-A-1 094 381, FR-A-1 270 904, FR-A-2 509 058, FR-A-2 524 656, FR-A-2 530 038, et EP-A-0 027 415) . Le document FR-E-73 293 combine aussi plusieurs de ces solutions. Le document WO-A-95/18986 décrit un serrage du fil de cerclage au moyen d'un système à genouillère articulée. Le document EP-A-0 093 108 propose une variante où chaque extrémité du fil présente une surépaisseur insérée à force dans une rainure de la monture, laquelle rainure présente une butée à chacune de ses extrémités pour réaliser un encliquetage de la surépaisseur. Enfin, le document EP-A-0 895 114 décrit un autre mode d'accrochage utilisant un simple crochet fixé à chaque extrémité du fil de cerclage souple, chaque crochet venant s'accrocher sur une boucle d'extrémité de la monture filaire ainsi équipée.

Ces solutions sont cependant onéreuses, et délicates à mettre en oeuvre pour fixer les verres car la précision requise est importante si l'on veut éviter tout jeu indésirable qui risquerait de laisser le verre s'échapper.

De plus, toute opération de réglage implique des manipulations délicates et fastidieuses.

L'état de la technique le plus proche est par exemple illustré par le document EP-A-0 027 415 déjà cité plus haut. Ce document illustre une monture de lunettes, du type comportant une structure principale de monture équipée de deux entourages ou cercles propres chacun à recevoir un verre de lunettes, chaque entourage ou cercle présentant d'une part une bordure supérieure essentiellement rigide qui est solidaire ou fait partie de la structure principale, et d'autre part un lien de cerclage souple passant dans une gorge périphérique du verre, ledit lien de cerclage souple étant attelé par chacune de ses extrémités à ladite structure principale, conformément au préambule de la revendication 1. Dans ce document, les parties concernées de la structure principale de monture sont usinées pour présenter un évidement dans lequel pénètre l'extrémité concernée du lien de cerclage souple en formant une double chicane, ce qui permet d'obtenir un ancrage dudit lien de cerclage souple. Chaque lien de cerclage souple est ainsi attelé par chacune de ses extrémités directement à la structure principale.

Un tel agencement est contraignant dans la mesure où il se prête mal à des montages et démontages successifs des verres. De plus, dans le cas d'une monture de lunettes dont la structure principale est réalisée sous la forme d'éléments relativement minces, notamment en métal, on ne dispose plus de suffisamment de matière pour usiner dans la structure des évidements d'ancrage des extrémités des liens de cerclage souples, de sorte que l'agencement connu est strictement limité à des structures de montures de type massif traditionnelles, réalisées en général en matière plastique.

### OBJET DE L'INVENTION

L'invention a pour but de concevoir un dispositif de fixation plus performant pour la fixation des liens de cerclage souples, c'est-à-dire en particulier se prêtant mieux à des opérations successives de montage et démontage des verres, et qui soit aussi aisément adaptable à des structures principales de monture de types très différents, incluant des structures principales réalisées sous forme d'un élément métallique plat conformé pour obtenir la forme désirée.

### BREVE DESCRIPTION DE L'INVENTION

Ce problème est résolu conformément à l'invention grâce à une monture de lunettes du type précité, dans laquelle chaque lien de cerclage souple est fixé par chacune de ses extrémités à une pièce intermédiaire d'ancrage associée, chaque pièce intermédiaire d'ancrage comportant en outre un moyen d'accrochage apte à coopérer avec un moyen homologue d'accrochage prévu sur la structure principale de monture, chaque pièce intermédiaire d'ancrage présentant ainsi supérieurement deux flasques juxtaposés réunis par un axe transversal qui constitue ledit moyen d'accrochage de ladite pièce d'ancrage, et la structure principale de monture présentant latéralement un crochet qui constitue ledit moyen d'accrochage homologue de ladite structure principale, lesdits moyens d'accrochage étant agencés pour réaliser une liaison de fixation libérable entre ladite pièce intermédiaire d'ancrage et ladite structure principale de monture, conformément à la revendication 1.

L'utilisation de moyens d'accrochage permet de décrocher et de raccrocher aisément et rapidement l'un ou l'autre des liens souples de cerclage pour démonter ou remonter un verre de lunettes. De plus, l'utilisation de telles pièces intermédiaires d'ancrage, qui constituent une véritable interface de montage, permet de s'adapter à des types très divers de structures principales de montures.

Il est en outre aisé de comprendre que, dans le cas d'une structure principale de monture réalisée sous la forme d'un élément plat, en particulier métallique, il est facile de réaliser sur un tel élément une découpe particulière dans les zones concernées pour former un crochet constituant le moyen d'accrochage homologue qui va permettre de fixer la pièce intermédiaire d'ancrage, laquelle pièce est attelée à une extrémité du lien de cerclage souple concerné.

On pourra prévoir que le crochet est plat, et que son épaisseur correspond à l'écartement des deux flasques juxtaposés. On obtient ainsi un centrage précis de chaque pièce intermédiaire d'ancrage sur le crochet concerné dans la position définitive de ladite pièce d'ancrage. Dans le cas particulier d'une structure principale de monture réalisée sous la forme d'une plaque métallique mince, le crochet est simplement découpé dans les zones de bord concernées de ladite plaque.

On pourra prévoir que les deux flasques juxtaposés sont réunis au niveau d'un fond de gorge dont le profil est incurvé pour guider le crochet lors de la mise en place de la pièce intermédiaire d'ancrage.

Avantageusement encore, l'axe transversal présente un dièdre coopérant avec le fond du crochet dans la position définitive de la pièce intermédiaire d'ancrage. On obtient ainsi une mise en place définitive dans une position angulaire parfaitement contrôlée et sans jeu.

De préférence encore, le crochet est surmonté d'un crantage de butée, et la pièce intermédiaire d'ancrage présente une arête terminale qui coopère avec le crantage de butée précité dans la position définitive de ladite pièce d'ancrage. Ce système de butée permet de positionner avec une grande précision chaque pièce intermédiaire d'ancrage sur la structure principale de monture.

Avantageusement encore, la pièce intermédiaire d'ancrage présente latéralement, du côté opposé au moyen d'accrochage, une excroissance allongée de centrage qui pénètre dans la gorge périphérique du verre une fois celui-ci mis en place.

De préférence encore, la pièce intermédiaire d'ancrage présente inférieurement un moyen pour fixer l'extrémité concernée du lien de cerclage souple associé. La pièce intermédiaire d'ancrage assure alors plusieurs fonctions, à savoir d'une part l'accrochage sur la monture, et d'autre part l'ancrage de chaque lien de cerclage souple.

En particulier, le moyen de fixation comporte un évidement de la pièce d'ancrage formant une chicane ou analogue. De préférence alors, l'évidement se termine inférieurement par un berceau demi-cylindrique dont le rayon correspond à celui du lien de cerclage souple, ce qui assure un positionnement fiable dudit lien de cerclage souple.

Avantageusement enfin, la pièce intermédiaire d'ancrage forme un ensemble unitaire monobloc, de préférence en acier inoxydable.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures des dessins annexés, où :
- la figure 1 illustre en vue de face une paire de lunettes, dont la monture est réalisée conformément à l'invention, avec quatre pièces intermédiaires d'ancrage qui assurent la fixation des deux liens de cerclage souples assurant la tenue des verres de lunettes ;
- les figures 2 et 3 sont des vues en élévation, à une échelle très agrandie, d'une des pièces intermédiaires d'ancrage qui équipent la monture précitée ;
- la figure 4 est une coupe selon IV-IV de la figure 3 permettant de mieux appréhender la structure de la pièce intermédiaire d'ancrage ;
- la figure 5 est une vue en bout de la pièce intermédiaire d'ancrage permettant de mieux distinguer l'agencement particulier d'une excroissance allongée de centrage ;
- la figure 6 est une coupe selon VI-VI de la figure 4, permettant de mieux distinguer la forme en berceau associée à l'appui du lien de cerclage souple associé ;

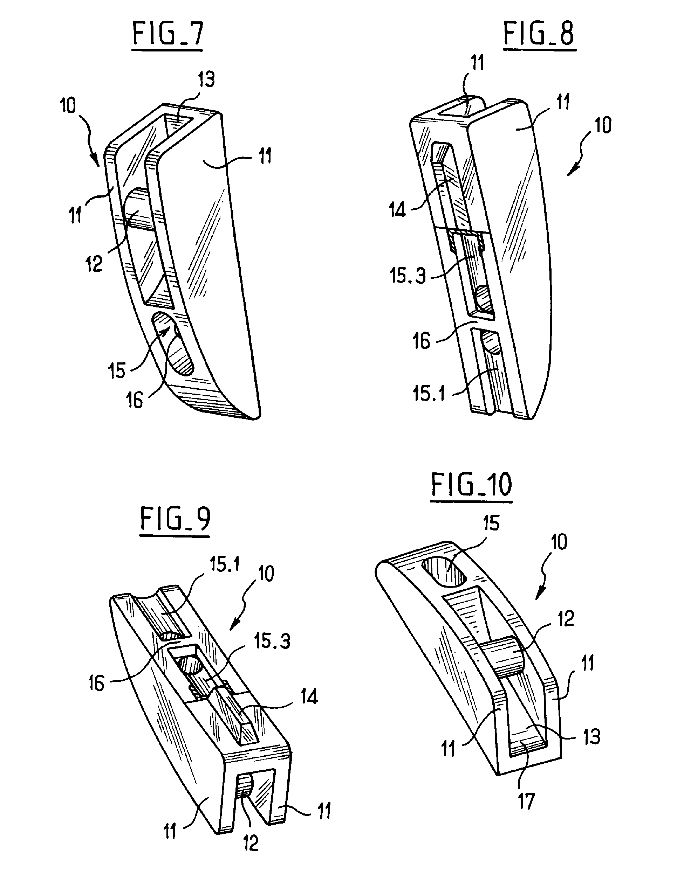

- les figure 7 à 10 ont des vues en perspective illustrant la même pièce intermédiaire d'ancrage, et permettant ainsi de mieux appréhender les différents éléments constitutifs de ladite pièce ;
- la figure 11 illustre schématiquement la mise en place d'une pièce intermédiaire d'ancrage, à laquelle est attachée l'extrémité d'un lien de cerclage souple, sur un crochet ménagé sur la structure principale de la monture, cette mise en place étant illustrée par quatre séquences successives respectivement a), b), c), et d).

### DESCRIPTION DETAILLEE DE L'INVENTION

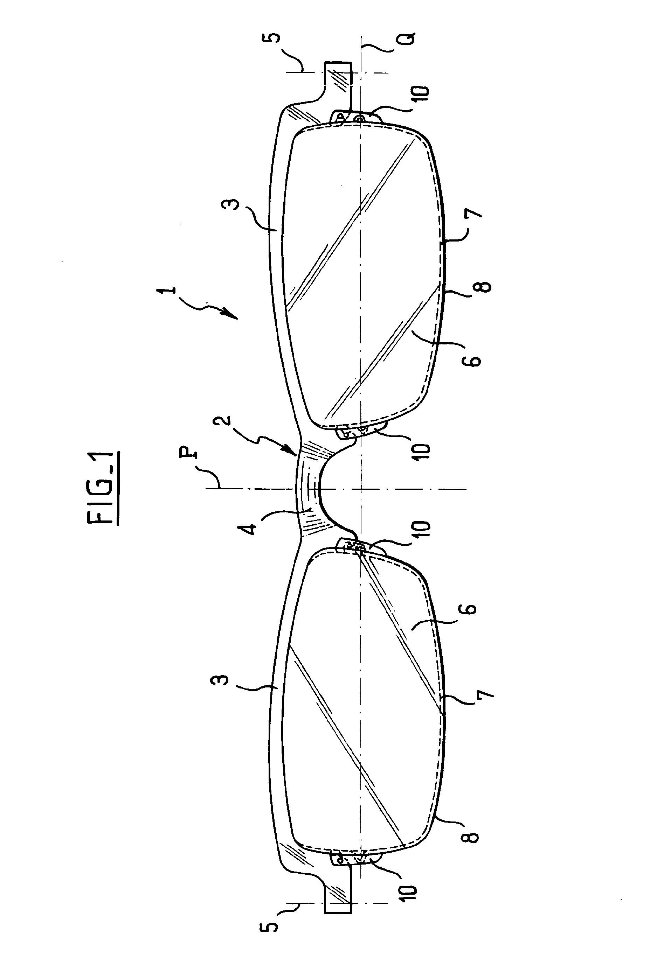

La figure 1 permet de distinguer une monture de lunettes 1, qui comporte une structure principale de monture 2, dont on distingue les deux bordures supérieures 3 agencées de part et d'autre d'un pontet central 4. Les bordures supérieures 3 se terminent au niveau d'éléments ou tenons de raccordement aux charnières, et on a schématisé ici l'axe desdites charnières par la référence 5. En l'espèce chaque bordure supérieure 3 fait partie de la structure principale 2, mais il va de soi que l'on pourra prévoir d'autres variantes dans lesquelles les bordures supérieures sont rapportées sur la structure principale, et sont solidaires de ladite structure principale. De façon classique, les deux verres de lunettes 6 sont disposés contre le bord inférieur des bordures supérieures 3, lesquelles bordures présentent alors en général une gorge de positionnement (non visible ici) recevant la tranche supérieure des verres 6, afin d'éviter tout débattement indésirable de ceux-ci.

Chaque verre de lunettes 6 présente une gorge périphérique 7 ou drageoir, dans laquelle vient passer un lien de cerclage souple 8 attelé par chacune de ses extrémités à la structure principale 2. En l'espèce, on a prévu une gorge périphérique 7 concernant une partie seulement de la périphérie des verres, mais il va de soi que l'on pourra prévoir une gorge concernant la totalité de la périphérie desdits verres. Ainsi, chaque bordure supérieure 3 et le lien de cerclage souple associé 8 constituent un entourage ou cercle propre à recevoir un verre de lunettes 6.

Conformément à une caractéristique de l'invention, chaque lien de cerclage 8 est fixé par chacune de ses extrémités à une pièce d'ancrage associée 10, chaque pièce intermédiaire d'ancrage 10 comportant en outre un moyen d'accrochage apte à coopérer avec un moyen d'homologue d'accrochage prévu sur la structure principale de monture 2, lesdits moyens d'accrochages étant agencés pour réaliser une liaison de fixation libérable entre ladite pièce intermédiaire d'ancrage et ladite structure principale de monture. Sur la figure 1 , on distingue ainsi quatre pièces intermédiaires d'ancrage 10 en partie inférieure desquelles sont fixées les extrémités des liens de cerclage souples 8, ces quatre pièces intermédiaires d'ancrage étant par ailleurs accrochées, par des moyens qui vont être décrits plus en détail ci-après, sur des parties conformées en conséquence et ménagées aux emplacements associés sur la structure principale de monture 2.

La monture de lunettes 1 ainsi équipée de ses verres 6 admet un plan vertical médian de symétrie noté P, et les extrémités ancrées des deux liens de cerclage souples 8 sont ici positionnées au niveau d'un même plan horizontal noté Q, mais ceci ne constitue naturellement qu'un cas particulier visant à conférer un effet esthétique particulier dû à l'alignement horizontal des quatre pièces intermédiaires d'ancrage. Il va de soi que l'on pourra en variante disposer ces pièces intermédiaires d'ancrage 10 à des niveaux différents.

Bien que cela ne soit pas visible sur la figure 1, la structure principale de monture 2 pourra être constituée par un élément métallique sous forme d'un tronçon de plaque sensiblement vertical, par exemple réalisée par mise en forme d'une plaque de titane d'un millimètre d'épaisseur. Ainsi qu'on le verra par la suite, il est particulièrement aisé de prévoir les moyens d'accrochage nécessaires pour d'accrochage des pièces intermédiaires d'ancrage même dans le cas d'une telle structure principale réalisée sous forme d'une plaque verticale.

On va maintenant décrire plus en détail la structure particulière de l'une des quatre pièces intermédiaires d'ancrage 10, les trois autres étant de structure identique ou symétrique par rapport au plan P.

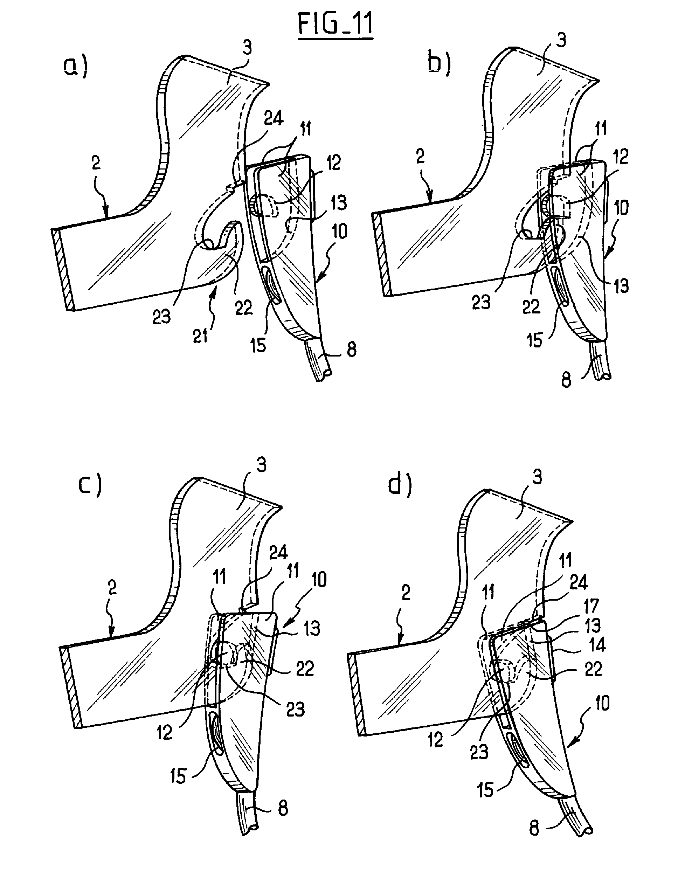

Chaque pièce intermédiaire d'ancrage 10 présente supérieurement deux flasques juxtaposés 11 qui sont réunis par un axe transversal 12. Cet axe transversal 12 constitue le moyen d'accrochage de la pièce d'ancrage 10 destiné à coopérer avec un moyen d'accrochage homologue qui est prévu sur la structure principale de monture 2. L'un des moyens d'accrochage homologues est mieux visible sur la figure 11, où l'on distingue ainsi une découpe 21 de la structure principale de monture 2, formant un crochet 22, dont le fond plat est noté 23. La découpe 21 se poursuit vers le haut par une partie cintrée qui est adaptée à la réception et au maintien en place de l'axe transversal 12 de la pièce intermédiaire d'ancrage 10. Cette partie cintrée se termine supérieurement par un crantage de butée 24 dont la fonction sera détaillée plus loin. Il est aisé de comprendre que la réalisation d'une telle découpe 21 sur une plaque de titane d'un millimètre d'épaisseur peut être obtenue aisément, ce qui permet de réaliser directement un crochet 22 de structure essentiellement plate. La structure principale de monture 2 présente ainsi latéralement quatre crochets 22 qui constituent les moyens d'accrochage homologues de ladite structure principale pour accrocher les quatre pièces intermédiaires d'ancrage 10 associées à la fixation des deux liens de cerclage souples 8.

Il va de soi que l'on pourra prévoir un agencement réciproque, avec un axe transversal sur la structure de monture et un crochet sur la pièce d'ancrage, mais l'esthétique sera en général moins satisfaisante.

La pièce intermédiaire d'ancrage 10 sera de préférence réalisée de telle façon que l'écartement de ses deux flasques juxtaposés 11 corresponde sensiblement à l'épaisseur du crochet plat 22. Ceci permet d'éviter tout débattement de la pièce intermédiaire d'ancrage 10 une fois celle-ci mise en place sur son crochet plat associé 22.

Les deux flasques juxtaposés 11 sont en outre réunis au niveau d'un fond de gorge 13 qui comporte une partie rectiligne se raccordant à une partie incurvée, le profil incurvé permettant ainsi de guider le crochet 22 lors de la mise en place de la pièce intermédiaire d'ancrage 10.

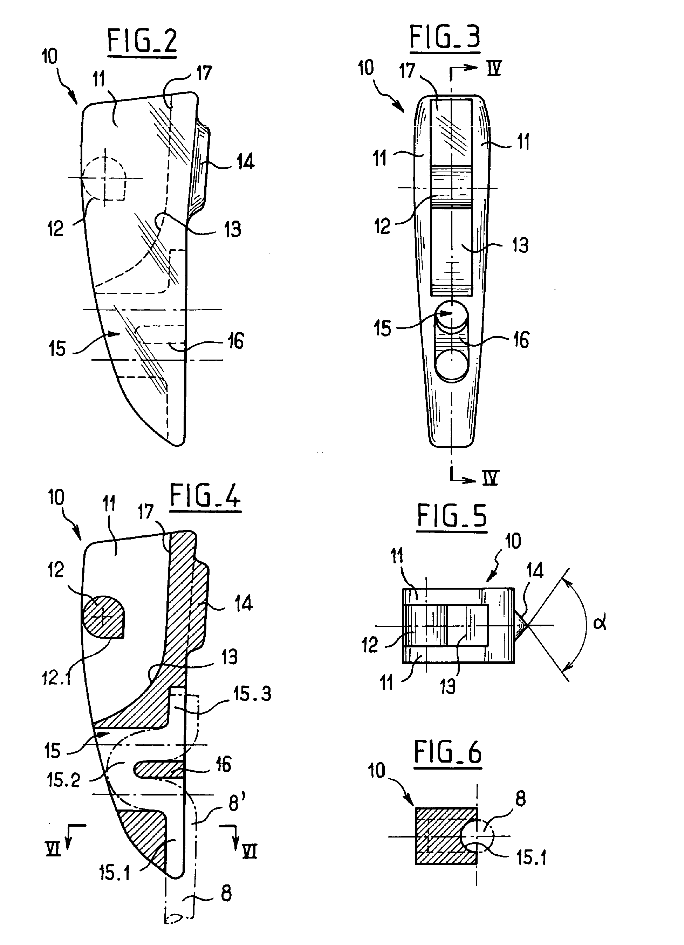

Ainsi que cela est mieux visible sur les figures 2 et 4, l'axe transversal 12 présente en l'espèce un dièdre 12.1, avec deux facettes orthogonales qui coopèrent avec le fond plat 23 du crochet 22 dans la position définitive de la pièce intermédiaire d'ancrage 10, laquelle position définitive est illustrée en d) sur la figure 11. Dans cette position, le calage angulaire (dans un plan vertical) de chaque pièce d'ancrage est parfait, grâce à la présence des dièdres à facettes orthogonales.

Chaque pièce intermédiaire d'ancrage 10 présente en outre latéralement, du côté opposé au moyen d'accrochage 12, une excroissance allongée 14. Lorsque l'un des verres de lunettes est mis en place, cette excroissance allongée 14 pénètre dans la gorge périphérique 7 du verre concerné, ce qui permet d'assurer un excellent centrage relatif entre le verre et la pièce intermédiaire d'ancrage 10. Pour un centrage très précis, il est intéressant de prévoir que cette excroissance allongée de centrage 14 soit réalisée avec une forme effilée se terminant en pointe au niveau du plan de symétrie de la pièce, en formant un angle noté a sur la figure 5, qui est par exemple ici de l'ordre de 110°.

Chaque pièce intermédiaire d'ancrage 10 présente en outre inférieurement un moyen pour fixer l'extrémité concernée du lien de cerclage 8 associé. On a représenté l'extrémité concernée notée 8' du lien de cerclage souple 8 sur les figures 4 et 6. En l'espèce, le moyen de fixation comporte un évidement 15 de la pièce d'ancrage 10 formant une chicane ou analogue, centré sur une nervure intermédiaire 16. L'évidement 15 comporte ainsi une partie inférieure 15.1, une partie centrale 15.2 qui débouche latéralement en formant une lumière oblongue, et une partie 15.3 qui est dans l'alignement de la partie 15.1. Le lien de cerclage souple 8 est alors en appui contre la paroi de la partie d'évidement 15.1, laquelle paroi est de forme demi-cylindrique de façon à former un berceau de réception pour le lien de cerclage souple 8. La partie 15.3 présente également une forme de berceau demi-cylindrique. Grâce à la chicane ainsi formée, on est assuré d'un ancrage fiable du lien de cerclage souple 8.

Il va de soi que l'invention n'est aucunement limitée à un tel mode d'accrochage des extrémités des liens de cerclage souples 8, et l'on pourra prévoir en variante un ancrage utilisant un passage dans lequel passe l'extrémité concernée du lien de cerclage souple, le blocage se faisant par un noeud terminal ménagé sur ledit lien (variante non représentée ici).

On notera enfin la présence d'une arête terminale 17 au niveau du fond de gorge 13, laquelle arête terminale est destinée à coopérer avec le crantage de butée précité 24 dans la position définitive de la pièce intermédiaire d'ancrage 10. Le calage angulaire de ladite pièce est alors très précis ce qui garantit une esthétique irréprochable grâce à la symétrie parfaite par rapport au plan vertical médian P.

Chaque pièce intermédiaire d'ancrage 10 forme ainsi un ensemble unitaire monobloc, qui peut être par exemple réalisé en acier inoxydable. A titre indicatif, chaque pièce intermédiaire d'ancrage 10 présente un dimensionnement s'inscrivant dans un rectangle de 3 mm sur 5 mm en vue de face, avec une épaisseur de l'ordre de 2 mm. L'axe transversal 12 présente alors un diamètre de l'ordre de 1 mm.

Ainsi, chaque pièce intermédiaire d'ancrage 10 comporte un moyen d'accrochage 12 (en l'espèce son axe transversal) apte à coopérer avec un moyen homologue d'accrochage 22 (en l'espèce un crochet plat) prévu sur la structure principale de monture 2, lesdits moyens d'accrochage 12,22 étant agencés pour réaliser une liaison de fixation libérable entre ladite pièce intermédiaire d'ancrage et ladite structure principale de monture.

La mise en place progressive de chaque pièce intermédiaire d'ancrage 10 est illustrée sous forme de quatre séquences sur la figure 11.

En a), la pièce intermédiaire d'ancrage 10, à laquelle a été fixée l'extrémité d'un lien de cerclage souple 8, est présentée devant la structure principale de monture 2, de telle façon que son axe transversal 12 soit au niveau de l'entrée de l'encoche associée au crochet 22.

En b), l'axe transversal 12 commence à pénétrer dans l'encoche précitée, et la partie concernée de la structure principale de monture 2, qui est ici réalisée sous forme de plaque, passe à l'intérieur de l'espace délimité par les deux flasques juxtaposés 11 de la pièce intermédiaire d'ancrage 10, tout comme le crochet 22.

En c), l'axe transversal 12 est arrivé en fond d'encoche, et il est maintenu latéralement par le crochet 22 .

En d), on a simplement procédé à un léger pivotement de la pièce intermédiaire d'ancrage 10 autour de son axe transversal 12 (dans un plan vertical) jusqu'à la venue en butée de l'arête terminale 17 contre le crantage de butée 24. Dans cette position, le bord latéral de la pièce intermédiaire d'ancrage 10 tourné du côté du verre vient prolonger le bord de la structure principale de monture 2, de façon à constituer un bord d'appui continu pour le verre concerné, lequel peut alors être mis en place dans l'entourage ou cercle ainsi réalisé. Lorsque le verre de lunettes 6 est mis en place, le lien de cerclage souple passe dans la gorge périphérique 7 dudit verre, ainsi que l'excroissance allongée de centrage 14. Chaque verre est ainsi aisément mis en place, en étant bien positionné par rapport à la structure principale de monture 2.

Pour le démontage, il suffit de dégager le lien souple de cerclage 8 du verre 6 concerné, ce qui permet de libérer la tension dans ledit lien, et, si nécessaire, de décrocher l'une ou les deux pièces intermédiaires d'ancrage 10 pour la ou les dégager de la structure principale de monture 2. Ceci permet en particulier de changer le lien de cerclage souple 8 et/ou la pièce intermédiaire d'ancrage 10, avant un remontage d'ensemble.

On est ainsi parvenu à réaliser un système de fixation très satisfaisant pour les liens de cerclage souples, lequel système permet à la fois un montage et un démontage aisés, mais aussi une adaptabilité à tout type de structure principale de monture, en particulier une structure réalisée sous la forme d'une mince plaque métallique verticale.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Monture de lunettes, du type comportant une structure principale de monture (2) équipée de deux entourages ou cercles (3,8) propres chacun à recevoir un verre de lunettes (6), chaque entourage ou cercle (3,8) présentant d'une part une bordure supérieure (3) essentiellement rigide qui est solidaire ou fait partie de la structure principale (2), et d'autre part un lien de cerclage souple (8) passant dans une gorge périphérique (7) du verre (6), ledit lien de cerclage souple étant attelé par chacune de ses extrémités à ladite structure principale; **caractérisée en ce que** chaque lien de cerclage souple (8) est fixé par chacune de ses extrémités (8') à une pièce intermédiaire d'ancrage associée (10), chaque pièce intermédiaire d'ancrage (10) comportant en outre un moyen d'accrochage (12) apte à coopérer avec un moyen homologue d'accrochage (22) prévu sur la structure principale de monture (2), chaque pièce intermédiaire d'ancrage (10) présentant ainsi supérieurement deux flasques juxtaposés (11) réunis par un axe transversal (12) qui constitue ledit moyen d'accrochage de ladite pièce d'ancrage, et la structure principale de monture (2) présentant latéralement un crochet (22) qui constitue ledit moyen d'accrochage homologue de ladite structure principale, lesdits moyens d'accrochage (12,22) étant agencés pour réaliser une liaison de fixation libérable entre ladite pièce intermédiaire d'ancrage et ladite structure principale de monture.

2. Monture de lunettes selon la revendication 1, **caractérisée en ce que** le crochet (22) est plat, et son épaisseur correspond à l'écartement des deux flasques juxtaposés (11).

3. Monture de lunettes selon la revendication 1 ou la revendication 2, **caractérisée en ce que** les deux flasques juxtaposés (11) sont réunis au niveau d'un fond de gorge (13) dont le profil est incurvé pour guider le crochet (22) lors de la mise en place de la pièce intermédiaire d'ancrage (10).

4. Monture de lunettes selon l'une des revendications 1 à 3, **caractérisée en ce que** l'axe transversal (12) présente un dièdre (12.1) coopérant avec le fond (23) du crochet (22) dans la position définitive de la pièce intermédiaire d'ancrage (10).

5. Monture de lunettes selon l'une des revendications 1 à 4, **caractérisée en ce que** le crochet (22) est surmonté d'un crantage de butée (24), et la pièce intermédiaire d'ancrage (10) présente une arête terminale (17) qui coopère avec le crantage de butée précité (24) dans la position définitive de ladite pièce intermédiaire d'ancrage.

6. Monture de lunettes selon l'une des revendications 1 à 5, **caractérisée en ce que** la pièce intermédiaire d'ancrage (10) présente latéralement, du côté opposé au moyen d'accrochage (12), une excroissance allongée de centrage (14) qui pénètre dans la gorge périphérique (7) du verre (6) une fois celui-ci mis en place.

7. Monture de lunettes selon l'une des revendications 1 à 6, **caractérisée en ce que** la pièce intermédiaire d'ancrage (10) présente inférieurement un moyen (15,16) pour fixer l'extrémité concernée (8') du lien de cerclage souple (8) associé.

8. Monture de lunettes selon la revendication 7, **caractérisée en ce que** le moyen de fixation (15,16) comporte un évidement (15) de la pièce d'ancrage (10) formant une chicane ou analogue.

9. Monture de lunettes selon la revendication 8, **caractérisée en ce que** l'évidement (15) se termine inférieurement par un berceau demi-cylindrique (15.1) dont le rayon correspond à celui du lien de cerclage souple (8).

10. Monture de lunettes selon l'une des revendications 1 à 9, **caractérisée en ce que** la pièce intermédiaire d'ancrage (10) forme un ensemble unitaire monobloc, de préférence en acier inoxydable.
